# EUROPEAN PATENT APPLICATION

(11) **EP 4 043 313 A1**
(43) Date of publication of application: **17.08.2022**
(21) Application number: 19820813.4
(22) Date of filing: 09.10.2019
(51) Int. Cl.: B61B 13/12, F03G 7/10, H02K 53/00, H02N 11/00

(54) **SYSTEM FOR THE PROPULSION OF A MOBILE OBJECT BY MEANS OF MAGNETIC IMPULSES**

(71) Applicant: Hernandez Herrero, Juan, 08034 Barcelona (ES)
(72) Inventor: Hernandez Herrero, Juan, 08034 Barcelona (ES)
(74) Representative: Manresa Medina, José Manuel
(86) International application number: PCT/ES2019/070685
(87) International publication number: WO 2021/069764

(57) **Abstract**

A system for the propulsion of a mobile object by means of magnetic impulses.

The system comprises a mobile object positioned over sliding elements, which moves on a ground base towards a given direction, characterized in that it comprises: an elevated structure, similar to a canopy, parallel to the mobile object and to the route of movement thereof, having housings that carry at least a first magnet, wherein said housing and the first magnet swing relatively to a tilting axis, a structure positioned on the mobile object comprising a leaning platform, positioned at the rear side of the mobile object with respect to the forward direction thereof, articulated with respect to the mobile object, at least one spring that separates the free end of the leaning platform from the mobile object, a sliding element positioned on the leaning platform being in contact with said sliding element, having the lower side of the elevated structure, and an inclined plane, located at the front of the mobile object in its forward direction, having at least a second magnet arranged with the same polarity as the first magnet.

## Description

System for the propulsion of a mobile object by means of magnetic impulses of the type comprising a mobile object positioned over sliding elements, which moves on a ground base towards given direction, characterized in that it comprises: an elevated structure, similar to a canopy, parallel to the mobile object and to the route of movement thereof, having housings that carry at least a first magnet, wherein said housing and the first magnet swing relatively to a tilting axis, a structure positioned on the mobile object comprising a leaning platform, positioned at the rear side of the mobile object with respect to the forward direction thereof, articulated with respect to the mobile object, at least one spring that separates the free end of the leaning platform from the mobile object, a sliding element positioned on the leaning platform being in contact with said sliding element, having the lower side of the elevated structure, and an inclined plane, located at the front of the mobile object in its forward direction, having at least a second magnet arranged with the same polarity as the first magnet, and, as the sliding element reaches the housing, the spring pushes the leaning platform and the leaning platform pushes the sliding element, which overcomes the resistance of the tilting housing, exposing the first magnet, which repels the second magnet and drags the mobile object along away from the first magnet, thus moving the sliding means, which slides over the lower side of the housing and closes the same over the elevated structure by tilting the housing in the opposite direction returning to its original position, compressing the spring.

### FIELD OF THE INVENTION

The present invention belongs to the field of mechanics, based on physics fundamentals.

The main object of the present invention is to provide a new propulsion system wherein a mobile object carrying a magnet is propelled by another magnet, both magnets having their poles facing each other with the same sign, which mobile object being positioned on a structure arranged at a certain distance and above said mobile object.

### BACKGROUND OF THE INVENTION

The need to transport oneself, to be transported or transporting objects is inherent to the evolution of the human species.

People are capable of moving thanks to the anatomy and the physiology that nature has provided human beings with. Moving requires spending a certain amount of energy, of which the human organism avails itself through the physiological metabolism. Such energy is not permanent but depends on the air inhaled and on the food ingested and is consumed through the survival of the being and by the external efforts.

Transporting objects also requires spending energy. Throughout the history of humankind there has been an enormous evolution in this aspect.

Initially, the effort was made by human beings solely, who provided all the force and the energy needed. Later, people started using animals, and here, too, the physiology and the metabolism of such animals were the source of the energy, which was consumed by the efforts demanded by motion and transportation.

Much later, people started using machines; such machines, whether simple or complex, always needed the power of men or animals to feed the necessary energy.

Later on, the development of knowledge led to building machines and vehicles that do not need human or animal energy but a different source of energy to perform the effort for which are needed. The source of such energy may be electricity or fuels, such as carbon, gasoline, oil or any other substance that is consumed in performing the effort for which the machine has been designed.

Other sources are powerful energy generators, such as nuclear power, all of which are known for the disadvantages they pose. However, this is not the suitable forum to discuss such matters.

Obtaining power through the consumption of fuels generates wastes that create serious disadvantages for the Earth, for living beings and for the aquatic and atmospheric environment.

But human beings have also learned to use the forces of nature and harness their energy into efficient labour. For instance, mills driven by the power of rivers, windmills, the current wind mill power generators, solar energy, harnessing sea waves, etc.

The power of nature is harnessed when accumulating solar energy, setting air and water in motion and that energy is the power source that sets these machines in motion.

One of the greatest advantages of using the forces of nature to produce energy is their low or null cost and its clean operation. In fact, no toxic residues are produced that be harmful to people, animals, plants, the water or the atmosphere. In addition, energy is continuously supplied by Nature.

However, the facilities that use the energy of water, wind or sun need fixed and permanent installations and the power generation must originate in the place where these facilities are built, even though the energy may then be transported and used somewhere else.

The contemplation of life continuously shows us how the universe is in perpetual motion. Physics and astronomers have taught us that the galaxies and the solar systems move, and so do the stars (including our own Sun). The planets and their satellites constantly revolve around their star of reference (sun or planet) and also rotate around their own axes, and they all do so as a result of energies that are already intrinsic to their nature, which are permanent, at least as seen from the human perspective.

One of the great forces of nature is magnetism, whose use has the advantage of being a permanent source of energy that is neither consumed nor depleted. In addition, magnetic energy does not depend on such circumstantial factors as the wind for wind energy, or the sun, for solar energy.

Thus, European Patent N° 1541439 (ES2305561) "TRANSPORT SYSTEM", of 2003, in the name SENYO KOGYO CO. LTD, is known, which refers to a transport system that allows a vehicle having driving means to move between two stations in a rail, the transport system comprising two acceleration zones (A, C) to accelerate the vehicle by supplying propulsion near each of the stations, and an autonomous moving zone (B) which allows the vehicle accelerated in said acceleration zone to run in the rail autonomously, without supplying the propulsion, wherein the vehicle has a driving wheel which runs on an auxiliary rail provided in the said autonomous running zone by using the said driving means, which is characterized in that the said means that supplies propulsion in one of said acceleration zones (A) is a linear-type accelerator and said means of supply of propulsion in the other acceleration zone (C) is a coastal-type accelerator; said linear accelerator accelerates the vehicle by providing propulsion force by means of a first magnet arranged along the rail in said acceleration zone and a second magnet mounted on the vehicle; and said coastal-type accelerator comprises an auxiliary rail formed by an upstream gradient near the station; and an elevator to raise the vehicle in said auxiliary rail, which is provided such that, when the elevated vehicle is released in said auxiliary rail, the vehicle is accelerated by the force of gravity.

State of the art is also Spanish Patent N ° 9601988 (ES2133226), "MAGNETIC MONORAIL TRAIN", of 1996, in the name of Manuel MUÑOZ SAIZ, which refers to a magnetic monorail train that comprises one or more lightweight wagons which surround the rail, except for a small lengthwise channel at the bottom and uses permanent rotary magnet wheels which attract the track or the rail made of ferromagnetic, iron material, etc., along the sides of the lower base, said wheels having their symmetrical plane that cuts them at their central circle, perpendicular to the rail surface and parallel to its longitudinal axis.

It is also worth mentioning European Patent n° 0234543 (ES2017652), "MAGNETIC FORCE SYSTEM FOR LOW-FRICTION TRANSPORTATION OF LOADS, of 1987, in the name of Peter SCHUSTER, which refers to a magnetic power system to transport loads without friction, whereby at least one magnet is secured to the load, and cooperates with a ferromagnetic profiled carrier. It is important that the magnets be arranged relatively to the profiled carrier so that the pole sides of a magnet cooperate with at least one vertical side of the profiled carrier and be essentially parallel to this side. A particularly good implementation is obtained when magnets are so arranged on both sides of a profiled side so that relatively to the side the poles have the same polarity (principle of repulsion). The magnets seen in their longitudinal directions are arranged in pairs and each pair is shortcircuited by a ferromagnetic plate.

### DESCRIPTION OF THE INVENTION

The present invention belongs to the field of mobile objects moved by magnetic force.

The nearest document is European Patent N° 0234543.

Said European Patent solves the problem of the high energy consumption that occurred in the documents cited by such patent.

This is solved by configuring a "U"-shaped profile open downwards, whose branches form vertical parallel sides, where a magnet is positioned.

The problem with this patent is, the same as with the patents cited in the background section hereof, that it is energetically non-viable.

The nearest document is also based on keeping the mobile object above the ground, which implies a huge consumption of energy. This mobile object still needs a linear engine for running.

The present invention is based on a mobile object that is propelled by magnetic force. Contrarily to the nearest document, this application does not need any linear engine to move, since it is the very repellence of the magnets that generates the movement of the mobile object.

The object of this invention comprises two essential components.

One of the is a mobile object, which runs along a base along a predetermined path, for instance, over rails.

Said mobile object has in its upper part a magnet obliquely oriented, so that the magnet sends its impulses backwards with respect to the forward advancement movement of the mobile object, and upwards.

Said mobile object also carries, in its rear, a leaning platform similar to a pole, alike a trolley, having a sliding element, for example a wheel, which is subjected to a constant upwards tension by means of a spring.

The other component is an elevated structure placed above the base, defining the path that the mobile object has to travel, and which elevated structure is parallel to such path. This structure, which is similar to a canopy, extends in the same length as the path that the mobile object has to travel. Its lower side has a smooth surface, although it can also be not completely smooth and can even have a different shape, for example, it may have a channel to facilitate the guiding of the wheel, with which it contacts the wheel or the sliding element that stems from the leaning platform of the mobile object.

The elevated structure, shaped as a canopy, is not physically continuous; throughout the structure, conveniently spaced, certain tri-dimensional housings have been inserted, the housings having a parallelepiped shape or other desired shape, such as cylindrical, conical, etc., which form a kind of casing. In its front side and in the forwards advancing direction of the mobile object, each of these housings comprises a wide opening, such as a window, while the remaining sides of the housings are closed.

These housings are embedded in the structure in such a way that they cannot move forward or backward, but they can rotate around a horizontal tilt axis, and perpendicularly to its longitudinal axis and to the path of the mobile object, such that when rotating around said tilt axis, the housings will initially drive the back side upwards with respect to the forward movement of the mobile object and will drive the front side downwards. Each of these housings carries inside at least one magnet; one of the magnet sides being positioned on the opening or window that the housing has on its front side.

When one of the housings rotates and exposes the side of the magnet downwards and forwards, the magnet emits a forward and downward impulse through the window of said housing.

When the magnet is in the upper side of the mobile object at the front and underneath the front side of the housing that has rotated, a magnetic force will be exerted between both magnets. In order for said force to push away, the magnets will have been arranged in such manner that their faces are the same sign, that is, positive opposite to positive or negative opposite to negative.

In this way, a repellence of the two magnetic forces occurs. Since the magnet contained in the housing of the elevated structure can rotate but cannot move, all the force generated by the magnetic repellence causes the mobile object to be driven forward.

In order for the force of the magnet contained in the housing does not obstacle the next passing of the mobile object, the housing of the elevated structure must go back to the horizontal position. To such end, the same sliding element that is positioned at the end of the leaning platform of the mobile object and which made the housing rotate, when running through the front side of its lower side, will cause it to return to the horizontal position.

The distances and the dimensions have been organized in such manner that the impulse that the mobile object receives is strong enough as to drive it up to the zone where the following housing is positioned, wherein the same process will be repeated, that is, when the sliding element of the leaning platform passes by the lower and back side of the new housing, it will be made to rotate exactly as before and for some moments it will offer its front face downwards and forwards and the force of the magnet that is exposed through its window to impulse the mobile object again, immediately after being horizontally positioned again when the sliding element passes by the front side of the lower side of the housing.

By repeating this process as many times as desired, the mobile object will run along a path as lengthy as the length of the system that will have been mounted and the corresponding number of casings.

The path can be longitudinal, curved, or mixed, with straight and curved parts. It can also be an open path, having a beginning and an end, or can be set as a closed circuit.

We will thus use an energy that is latent in nature to obtain movement, without any fuel consumption.

An object of the present invention is a system for the propulsion of a mobile object by means of magnetic impulses of the type comprising a mobile object positioned over sliding elements, which moves on a ground base towards a given direction, characterized in that it comprises: an elevated structure, similar to a canopy, parallel to the mobile object and to the route of movement thereof, having housings that carry at least a first magnet, wherein said housing and the first magnet swing relatively to a tilting axis, a structure positioned on the mobile object comprising a leaning platform, positioned at the rear side of the mobile object with respect to the forward direction thereof, articulated with respect to the mobile object, at least one spring that separates the free end of the leaning platform from the mobile object, a sliding element positioned on the leaning platform being in contact with said sliding element, having the lower side of the elevated structure, and an inclined plane, located at the front of the mobile object in its forward direction, having at least a second magnet arranged with the same polarity as the first magnet, and, as the sliding element reaches the housing, the spring pushes the leaning platform and the leaning platform pushes the sliding element, which overcomes the resistance of the tilting housing, exposing the first magnet, which repels the second magnet and drags the mobile object along away from the first magnet, thus moving the sliding means, which slides over the lower side of the housing and closes the same over the elevated structure by tilting the housing in the opposite direction returning to its original position, compressing the spring.

### BRIEF DESCRIPTION OF THE DRAWINGS

In order to facilitate the explanations, this description includes four sheets with drawings wherein a practical embodiment has been represented, included by way of a non-limiting example of the scope of this invention:
- Figure 1 is a view of a mobile object as it approaches the magnet in the canopy, and
- Figure 2 is a view of a mobile object uncovering the magnet of the canopy,
- Figure 3 is a view of the mobile object moving forward by the action of the repellence between the magnets and the consequent closing of the canopy with the magnet, and
- Figure 4 is a detailed view of a housing and a first magnet, with a transparent partial view of the housing.

### SPECIFIC EMBODIMENT OF THE PRESENT INVENTION

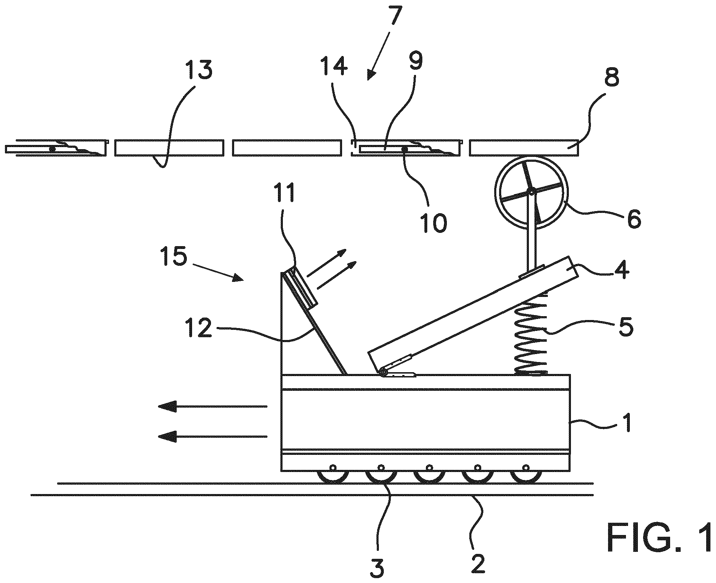

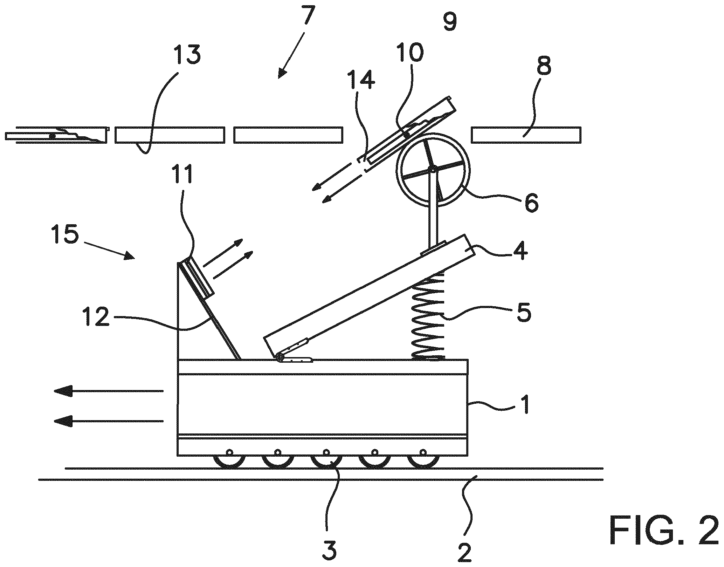

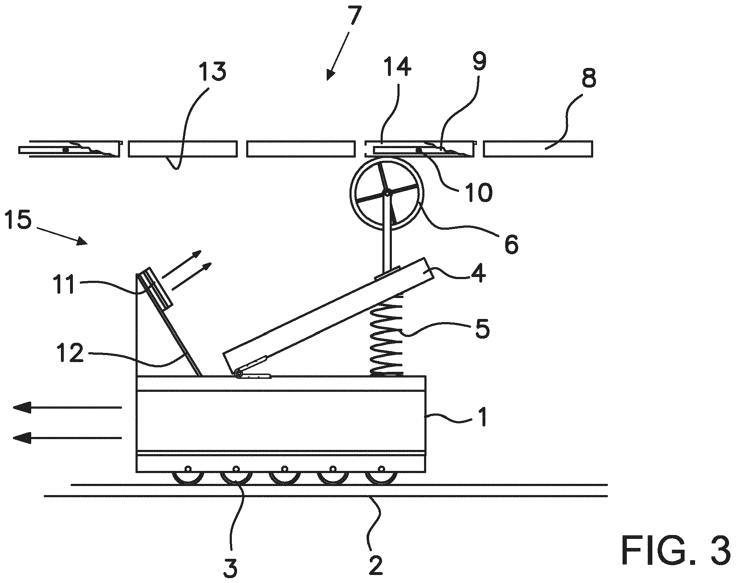

Thus, Figures 1, 2 and 3 represent a mobile object 1, a surface 2, which in this embodiment consists of rails, sliding elements 3, which in this embodiment consist of lower wheels, a structure 15 having a leaning platform 4, a spring 5, sliding means 6, which in this embodiment is a second wheel, an elevated structure 7 or canopy, a panel 8 with its lower side 13, a housing 14 wherein the first magnet 9 is arranged and its tilt shaft 10, an inclined plane 12 and the second magnet 11.

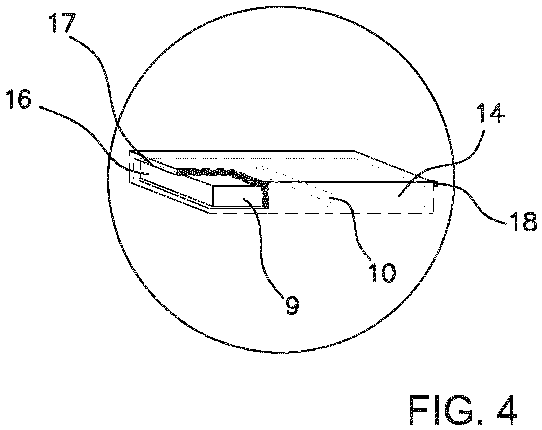

Figure 4 illustrates the housing 14, wherein the first magnet 9 is arranged with its front side 16 and its tilt shaft 10, a window 17 and a stop end 18.

As an initial consideration, the housings 14 and the panels 8 are separated in Figures 1-3. Such separation is only schematic and is aimed at facilitating the display and explanation of the figures, whereas, in practice, the housings and the panels would be arranged continuously, without spacing.

As it is known, magnets have two poles, one positive and one negative, and the forces are located as positive or negative typically at the ends of the magnets or at their different sides.

In addition, it is well known that when two magnets are set near, at a suitable distance, a process of attraction or repellence will occur between them, depending on how the poles are facing each other. If the poles of different signs (positive opposite negative) are facing each other, the magnets will attract each other and attempt to join.

On the contrary, if the magnets are arranged in such a manner that the equal signs at their ends are facing each other (positive opposite positive, or negative opposite negative), the magnets will repel each other, generating a motion that will distance one magnet from the other.

The present system has been developed on the basis of this capacity of repellence between two magnets, wherein a mobile object 1, which carries a magnet 11, is moved by the impulses of another magnet 9, which is above and at a suitable distance for the mobile object 1 to receive the repellence from the other magnet 9, and such repellence causes the mobile object 1 to move in a direction that is opposite to the location of magnet 9 that repelled it.

The system comprises two fundamental parts:
One part is the mobile object 1, having no energy of its own but which, besides the load it is capable of transporting, has in its upper part a structure 15 having a second magnet 11 whose magnetic field is obliquely directed rearwards and upwards. Said mobile object 1 moves along a fixed and marked path, for instance, along rails 2.

The other part is an elevated structure 7 made up by a platform elevated above the path that the mobile object 1 has to travel, parallel to such path. The elevated structure 7 must be kept fixed by any means, for instance, by means of struts; with a horizontal projection of a vertical side, or by any other method, so that it forms some sort of a canopy above the path that the mobile object 1 has to travel.

The structure can rest on the ground or on another firm structure by means of lateral crossbars, which may be arranged on the external and/or the internal part of the platform and must rest on the ground or on the structure that provides firm support.

In addition, if the path is a closed circuit, the structure may rest over spokes or braces stretching from a central pole.

Such elevated structure 7, whose lower side 13 is horizontal, elongated and parallel to the path that the mobile object must travel, has certain interruptions separated at fixed distances, such interruptions containing mobile housings 14, which cannot move forward or backwards but can only rotate around a transversal tilt shaft 10, located in the middle of its anterior-posterior dimension, whereby, if they are pushed from bellow by the back part, they will raise the back side and will drive the front side 16 downwards.

The structure 7 is raised so that the first magnets 9 contained therein and the second magnet 11 contained in the mobile object 1 have a parallel path, being at an suitable distance for the repellence to occur when the two magnet sides having one same sign face each other.

The opposite movement, that is, raising the front side of the housing 9 until reaching the horizontal position and having the back side descend, is limited by the back side of the housing 14 reaching also the horizontal position and stopping.

Inside each of these housings 14, the first magnet 9 has been arranged and the front side 16 of each housing 14 has an opening like a window 17 large enough for the magnet 9 placed therein to exert its magnetic force in the forward direction, without any obstacles.

The housings 14, which are tridimensional, may adopt a form such as shown in Figure 4, similar to a parallelepiped, although they may also be configured with other desired shape, such as cylindrical, conical, etc.

The elevated platform 7 is arranged parallel to the path which the mobile object 1 will travel, so that the housings 14 having the magnets 9 in their upper side are parallel to the zone where the mobile object 1 passes or will pass.

The mobile object 1, which can either run on the rails 2 o on any other means that will constrain it to a path parallel to the elevated structure 7, carries in its upper part a structure 15 having a second magnet 11 which has been placed with an oblique inclination, so that its magnetic field is directed backwards and upwards in order for it to perpendicularly receive the impulse generated by the repellence from the first magnet 9 positioned in the housing 14 above, when the housing swings downwards and forwards.

The path of the mobile object 1 may be always straight or may be straight with occasional curves or may be always curved. The path may also be open, having a start and an end, o may be a closed circuit, and so it will have some curves or be always curved.

The path will be as long as desired, consistently arranging the corresponding length of the elevated structure 7 and the number of housings 14, as necessary.

Both magnets 9, 11, the one in the upper side of the mobile object 1 and the one that is exposed at the front side 16 of the housing 14, have been arranged in such a manner that magnetic poles of the same sign face each other, so that when they face each other at a suitable spot, the magnetic repellence will cause the mobile object 1 to move.

In the upper part of the mobile object 1 the structure 15 has been mounted with a leaning platform 4 having a sliding means 6 similar to an obliquely backwards or upwards projection (or pole) (similar to the trolleys of the old electric trams and trolleybuses), but without the function thereof being that of taking in electric current.

This leaning platform 4 has a sliding means 6, such as, for example, a wheel, which is in contact with the lower side 13 of the platform, and a spring 5 (could have more than one spring) which tends to push said wheel upwards 6.

The pressure exerted by such spring 5 on the lower side 13 of the canopy 7 must be adequate, so that the wheel 6 passing under a housing 14 raises that back side thereof up to an inclination such that, at a certain point, its front side 16 faces the mobile object that has passed bellow and provides a new impulse.

The pressure exerted by the spring must be smooth enough as to allow the wheel, after sliding by the front side of the lower side 13 of the housing 14 which has just tilted, to push the front 16 side of the housing upwards to then return to its horizontal starting position.

The leaning platform 4 and the wheel 6 have a total size such that allows the wheel 6 to slide and reach the height of the lower side 13 of the fixed structure or panel 8 and the lower side 13 of the housings 14, which carry the magnets 9.

While the wheel 6 moves along the fixed panels 8 of the lower side 13 of the elevated structure 7, the wheel just slides along; however, when it reaches the back part of a housing 14, the force of the spring 5 makes the wheel to drive half of the back part of the housing 14 upwards; consequently, the front part inclines downwards and thus offers its magnetic field through the front opening or window 17, generating a magnetic force that repels the second magnet 11 carried by the mobile object 1, causing it to move forward.

Between one housing 14 and the next housing, the canopy 7 offers a smooth lower side 13 whereby the wheel 6 slides, which will cause each housing 14 to swing until it reaches it.

Said lower side 13 could not fully smooth; other shapes that adapt to the sliding means 6, are possible, for example, it may include one or more grooves, etc.

The housings 14 that carry the magnets 9 are arranged at fixed and equidistant intervals, with a suitable distance between them so that each impulse received by the mobile object 1 causes said mobile object 1 to move to the area where said mobile object 1 must receive the impulse of the magnet contained in the next housing 14.

When idle, the magnet 9 carried in each housing 14 exerts neither attraction nor repellence over any object, since the canopy holding the housing 14 is made of a non-magnetizable material such as, for example, wood, in order to avoid interaction with other metallic or magnetic elements. In addition, the distance between each two housings 14 is such that the magnets contained therein neither attract nor repel each other.

Each of these housings 14, which is in a horizontal position when idle, has in its centre a transversal and horizontal tilt shaft 10, perpendicularly to the path of the mobile object 1, which allows the housing to rotate, thereby swinging and directing its front side 16 downwards, so the housing it will lean downward and forward, exposing the magnetic field of the first magnet 9 contained therein through the front opening or window 17 that each said housing 14 has in its front part.

In this way, the magnetic field of the first magnet 9 that looks down from the elevated structure 7 (similar to a discharging hopper), if it finds at the suitable distance the mobile object 1 expected to move and which contains inside its structure 15 a second magnet 11 that backwards and upwards offers a charge with the same sign as the sign exhibited by the first magnet 9 which, having rotated from above and established its magnetic field, both magnets having been placed in such manner that both have the same sign, then the two magnets 9,11 will repel each other.

Since the housing 14 which is above may not move forward or backwards because it is held in place in the canopy 7, the repellence of both magnetic fields will cause the mobile object 1, which is positioned at the lower side, to receive the repellence force from both magnets 9 and 11 and will therefore move forward.

The impulse received by the mobile object 1 every time a magnet 9 of the elevated structure 7 propels it, has to be sufficiently intense in order for said mobile object 1 to reach the following area where the elevated structure 7 has a new housing 14, which will in turn rotate and provide the following impulse.

Once the mobile object 1 has received the impulse of the magnet 9 positioned inside the housing 14, said housing 14 stops emitting its magnetic force downwards. As such, wheel 6, which just caused the housing 14 to tilt with the front part leaning forward and downwards when it slid by the front part of the lower side 13 of such housing 14, now causes the housing 14 to return to its horizontal position.

To help the housing 14 become horizontal, it would be possible to place a stop end 18 that does not allow the housing 14 to tilt beyond the horizontal position when it returns to the idle or horizontal position.

Immediately after this, when the housing 14 has rotated downwards and has propelled the mobile object 1, the wheel 6, which is now at the level of the lower side 13 of the housings 14, will remain in contact with the housing 14 that has just rotated, and by effect of the force of the spring 5 pushing upwards the front side of the housing 14 that had rotated, it will go back to its horizontal position, and will therefore stop emitting its magnetic field downwards.

By moving forward, the mobile object 1 will cause that the wheel 6 of the posterior-superior leaning platform 4 of the mobile object 1, upon reaching to the area where the next housing 14 is positioned, contacts the rear part of the next housing 14, causing the housing 14 to rotate again, so that is rear part moves upwards and the front part movers downwards.

Such movement of the new housing 14 results in that its front side 16, which also has a front opening or window 17 where its own magnet 9 exposes its magnetic field downwards, causes a new movement of the mobile object 1, which in turn, by sliding the wheel 6, causes that the housing 14, after having sent a new impulse to the mobile object 1, returns to the horizontal position and stops emitting its magnetic force downwards.

This new anterograde movement of the mobile object 1 causes the wheel 6, which rises from the mobile object 1 until contacting the lower side 13 of the housing 14, when passing by the front part thereof, to drive it again until its horizontal position, whereby it stops emitting the magnetic impulse downwards.

And so on, in such a way that each housing 14 in the canopy undergoes one turn, inclining its rear part upwards and its lower part downwards, which is caused by the wheel that travels from the mobile object 1to the lower side 13 of said elevated structure 7, when sliding through the lower side 13 of the elevated structure 7, has its spring 5 exert an upward force.

In this manner, we can make the mobile object 1 progress with almost no energy consumption, except for the energy used for the first impulse and, if it is so desired, to stop the system. Thus, the mobile object 1 will travel as much of the path as we wish, and we must only organize the length of the path, the number of housings 14 with first magnets 9, the dimensions of the housings 14, the distance between them, the position of the mobile object 1 and its distance from the elevated structure 7, in according with the intensity of the magnetic repellence occurred between the first magnet 9 and the second magnet 11, which is carried by the mobile object 1.

The inclined plane 12 is adjustable to allow a correct positioning of the second magnet 12 with respect to the first magnet 9, so that they will face each other in an active position.

We shall also have pre-established the length and the inclination of the leaning platform 4, which carries the wheel 6, which will initially cause the inclination and then the return to the horizontal position of the housings 14 that carry the first magnets 9.

In addition, the force of the spring 5 will be adjusted, which makes the housings 14 tilt 14 with the adequate force for them to be inclined at the suitable angle, and then to return without difficulty to the horizontal position when pushing the front part upwards.

The more powerful the magnets, the greater the driving force we will generate, and as for the length of the path to be travelled by the mobile object 1, it will be as much as we wish, depending only on the greater or lesser number of housings 14 with magnets we provide and on the corresponding length of the rail 2 on which we wish that the mobile object 1 runs.

In this way, the movement of a mass is achieved with hardly any energy wastefulness.

In addition, if we set a closed circuit, for example, having a circular shape, the movement of the mobile object 1 would only stop when the system is purposely stopped. We shall only have needed a first impulse to incline the first housing 14, which will move the mobile object 1and which impulse may be applied manually or by any other means.

How to start up and stop the movement:
Setting the system in motion only requires rotating the first housing 14, either manually or by any other means; said housing 14, which will have bellow it and slightly forward, at the suitable position and distance, the mobile object 1 that carries the second magnet 11.

At this point, the repellence between the magnets will generate an impulse that makes the moving 1 object go forward until it passes underneath the housing 14 and, in such way, every new impulse is automatically generated by the system.

To stop the run, we will only have to block the housings 14 of the elevated structure 7 at the desired spot, in order to prevent the housings 14 from rotating and thus stop sending magnetic impulses to the mobile object 1. Any other breaking system may be added to avoid that the inertia drives the mobile object 1 beyond the desired stopping spot.

The present invention describes a new system for the propulsion of a mobile object by means of magnetic impulses. The examples mentioned herein are not limiting of the present invention, which may therefore be used and applied in different manners, all of which within the scope of the following claims.

## Claims

1. A system for the propulsion of a mobile object through magnetic impulses of the type comprising a mobile object (1) arranged over sliding elements (3) which moves over a base (2) towards a given direction, **characterized in that** it comprises:
- an elevated structure (8), similar to a canopy, positioned parallel to the mobile object (1) and to the running path thereof, having housings (14), which are separated at a pre-determined distance, wherein at least one first magnet (9) is arranged, wherein such housing (14) and the first magnet (9) tilt with respect to a tilt shaft (10),
- a structure (15) arranged above the mobile object (1) that comprises a leaning platform (4), positioned at the rear side of the mobile object (1) with respect to the forward running direction of said mobile object (1) and articulated with respect to the mobile object (1), at least one spring (5) that separates the free end of the leaning platform (4) from the mobile object (1), a sliding element (6) positioned over the leaning platform (4) in contact with such sliding element (6) having the lower side (13) of the elevated structure (8), and an inclined plane (12), arranged at the front side of the mobile object (1) in its advancement direction, with at least one second magnet (11) arranged with the same polarity of the first magnet (9),
and **in that** when the sliding element (6) reaches the housing (14), the spring (5) pushes the leaning platform (4) and the leaning platform (4) in turn pushes the sliding element (6), which overcomes the resistance of the housing (14), which tilts and exposes the first magnet (9), which repels the second magnet (11) and drags the mobile object away from the first magnet (9), moving the sliding means (6), which slides over the lower side of the housing (14) and closes it over the elevated structure (7) when it causes the housing (14) to swing in the opposite direction, and the leaning platform (4) returns to its original position, compressing the spring (5).

2. A system according to claim 1, **characterized in that** the sliding means (6) is a wheel.

3. A system according to claim 1, **characterized in that** the housing (14) is made of a non-magnetizable material.

4. A system according to claim 3, **characterized in that** the housing (14) comprises an end stop (18) when said housing (14) closes over the elevated structure (7).

5. A system according to claim 1, **characterized in that** the inclination of the inclined plane (12) can be adjusted with respect to the mobile object (1).

6. A system according to any of the previous claims, **characterized in that** the sliding elements (3) are wheels and the base corresponds with train rails (2).
